# EUROPÄISCHE PATENTANMELDUNG

(11) **EP 3 086 007 A1**
(43) Veröffentlichungstag der Anmeldung: **26.10.2016**
(21) Anmeldenummer: 16161518.2
(22) Anmeldetag: 22.03.2016
(51) Int. Cl.: F16K 15/02, F16K 15/06, F16K 17/04

(54) **RÜCKSCHLAGVENTIL MIT INTEGRIERTEM DYNAMISCHEN DÄMPFUNGSGLIED**

(30) Priorität: 20.04.2015 DE 102015105961
(71) Anmelder: POREP GmbH, 22399 Hamburg (DE)
(72) Erfinder: Porep, Thomas, 22399 Hamburg (DE)
(74) Vertreter: Lobemeier, Martin Landolf

(57) **Zusammenfassung**

Rückschlagventil (10) mit einem Zulauf (20), einem Ablauf (30) und einem gegen die in Richtung des Zulaufs (20) gerichtete Kraft einer Feder (40) verschieblich gelagerten Rückschlagkörper (50), wobei der Rückschlagkörper (50) einen in den Zulauf (20) einführbaren Abschnitt (52) aufweist, an dessen Umfang eine den Zulauf (20) verschließende Dichtung (52a) angeordnet ist, dadurch gekennzeichnet, dass der Rückschlagkörper (50) in einer in Richtung des Ablaufs (30) offenen und in Richtung des Zulaufs (20) durch den Rückschlagkörper (50) abdichtend verschlossenen Hülse (60) geführt ist und zwischen dem Rückschlagkörper (50) und der Innenwandung der Hülse (60) ein Zwischenraum (62) gebildet ist, der zur Ableitung eines am Ablauf (30) auftretenden Überdrucks mit dem Ablauf (30) kommunizierend verbunden ist.

## Beschreibung

Die Erfindung betrifft ein Rückschlagventil mit einem Zulauf, einem Ablauf und einem gegen die in Richtung des Zulaufs gerichtete Kraft einer Feder verschieblich gelagerten Rückschlagkörper. Die Erfindung betrifft insbesondere ein Rückschlagventil der vorgenannten Art zur Verwendung bei der Herstellung von Kraftstoff/Wasser-Gemischen, speziell für Schiffsdieselmotoren.

Zur Verringerung von Emissionen wie auch zur Erhöhung der Viskosität des dem Schiffsdieselmotor zugeführten Kraftstoffs wird in Schiffsdiesel-Kraftstoff Wasser eingebracht, um hieraus eine Kraftstoff-Wasser-Emulsion herzustellen.

Das Einbringen des Wassers in den Kraftstoff erfolgt üblicherweise im Schiffsdiesel-Druck-Zirkulationskreis. In diesem Kreislauf sind jedoch bei einem Normaldruck von unter 16 bar, in der Regel 6 bis 12 bar, sehr oft sehr hohe Druckschläge bis zu über 200 bar zu verzeichnen. Diese Druckstöße entstehen, wenn die Einspritzpumpen im Teillastbereich sehr früh den nicht benötigen Kraftstoff in die Rückleitung einleiten. Die Druckstöße sind dabei sehr kurz, oft nur 1/100 Sekunde.

Zur Vermeidung eines Reflux von Kraftstoff in die Wasserleitung werden daher Rückschlagventile verwendet.

Nachteilig an den bekannten Rückschlagventilen ist allerdings, dass diese von den Druckwellen der Einspritzpumpen unterlaufen werden, da sie entweder zu träge sind oder ein zu geringer Differenzdruck auf das Rückschlagventil wirkt. Durch diese Nachteile kann Schiffsdiesel in die Wasserleitungen eindringen.

Aus der US 2011/0277872 A1, der US 2015/0034179 A1, der US 4 228 820 A und der GB 2 509 077 A bekannte Rückschlagventile lösen dieses Problem nicht.

Aufgabe der Erfindung ist es daher, ein Rückschlagventil zu schaffen, das einen Rückfluss stromaufwärts über das Rückschlagventil hinaus auch bei geringen Druckdifferenzen zwischen Zulauf und Ablauf und innerhalb kurzer Reaktionszeiten wirkungsvoll verhindert. Dieses Rückschlagventil soll insbesondere für die Verwendung in Kraftstoffleitungen von Schiffsdieselmotoren zur Herstellung von Kraftstoff-Wasser-Gemischen geeignet sein.

Diese Aufgaben werden erfindungsgemäß durch das Rückschlagventil mit den Merkmalen von Anspruch 1 gelöst. Die Unteransprüche geben vorteilhafte Ausgestaltungen der Erfindung wieder.

Grundgedanke der Erfindung ist es, das Rückschlagventil so auszubilden, dass die Rückstoßwelle nicht wie bei herkömmlichen Rückschlagventilen direkt auf die Ventildichtung wirkt.

Vielmehr wird der auf den Rückschlagkörper wirkende Druck eines in Richtung stromaufwärts wirkenden Druckstoßes seitlich in das Gehäuse des Rückschlagventils abgeführt.

Das erfindungsgemäß ausgestaltete Rückschlagventil weist also einen Zulauf, einen Ablauf und einen gegen die in Richtung des Zulaufs gerichtete Kraft einer Feder verschieblich gelagerten Rückschlagkörper auf, wobei der Rückschlagkörper einen in den Zulauf einführbaren Abschnitt aufweist, an dessen Umfang eine den Zulauf verschließende Dichtung angeordnet ist. Dabei ist der Rückschlagkörper in einer in Richtung des Ablaufs offenen und in Richtung des Zulaufs durch den Rückschlagkörper abdichtend verschlossenen Hülse geführt.

Die Hülse hat die Funktion, einen aus dem Ablauf in das Rückschlagventil zurückgeführten Rückschlag in das Gehäuse des Rückschlagventils abzuführen, sodass nach einer bevorzugten Ausgestaltung zwischen dem Rückschlagkörper und der Innenwandung der Hülse ein Zwischenraum gebildet ist, der zur Aufnahme und Ableitung eines am Ablauf auftretenden Überdrucks mit dem Ablauf kommunizierend verbunden ist.

Nach einer bevorzugten Ausgestaltung weist der Rückschlagkörper hierfür eine zum Ablauf geöffnete Längsbohrung und eine die Längsbohrung mit dem Zwischenraum verbindende Querbohrung auf. Diese Ausgestaltung verringert durch die Umlenkung der longitudinal auf den Rückschlagkörper wirkenden hydraulischen Kräfte in auf das Gehäuse des Rückschlagventils wirkende Querkräfte den auf den Ventilsitz lastenden Druck.

Darüber hinaus bildet die Hülse einen Anschlag für den Rückschlagkörper aus, der die longitudinale Verschieblichkeit des Rückschlagkörpers in Richtung des Zulaufs begrenzt. Dadurch wird die Kraft einer stromaufwärts wirkenden Druckwelle, die auf den Rückschlagkörper wirkt, longitudinal in die Hülse eingeleitet, ohne dass die Dichtungen belastet werden.

Bei Ausbildung des Rückschlagventils mit einer Hülse ist die Feder bevorzugt in der Hülse gelagert.

Weiter ist es bevorzugt, dass der Zulauf einen in seinem vom Rückschlagkörper überstrichenen Bereich angeordneten radial verlaufenden Kanal aufweist, der mit dem den Zulauf mit dem Ablauf verbindenden Fluidkanal kommunizierend verbunden ist. Im offenen Zustand des Ventils gibt der Rückschlagkörper den Radialkanal frei, sodass der Fluidfluss vom Zulauf zum Ablauf ungehindert erfolgen kann. Bei einem Rückschlag wird der Zulauf vom Rückschlagkörper derart verschlossen, dass die Dichtung des Rückschlagkörpers stromaufwärts des Radialkanals zu liegen kommt und vom in den Zulauf eingeführten stromabwärts der Dichtungen gelegenen Teilabschnitt des Rückschlagkörpers verschlossen wird. So wird ebenfalls verhindert, dass der Rückschlag unmittelbar auf die Dichtung des Rückschlagventils wirkt.

Der Zulauf und der in den Zulauf einführbare Abschnitt des Rückschlagkörpers sind bevorzugt zylindrisch ausgebildet.

Schließlich sind bevorzugt zwei am Umfang des in den Zulauf einführbaren Abschnitts des Rückschlagkörpers, den Zulauf verschließende Dichtungen vorgesehen, damit ein stromaufwärts führender Fluidrücklauf über das Rückschlagventil hinaus vollständig unterbunden werden kann.

Durch die federnde Lagerung des Rückschlagkörpers und die auf den Rückschlagkörper seitens des Zu- und des Abflusses wirkenden hydrodynamischen Kräfte, wirkt der Rückschlagkörper als dynamisches Dämpfungsglied in der das Rückschlagventil enthaltenden Leitung.

Die Erfindung wird anhand eines in den Zeichnungen dargestellten, besonders bevorzugt ausgestalteten Ausführungsbeispiels näher erläutert. Es zeigen:
- Fig. 1: ein besonders bevorzugt ausgestaltetes Rücklaufventil nach der Erfindung im offenen Zustand in einer geschnittenen Ansicht; und
- Fig. 2: das besonders bevorzugt ausgestaltete Rücklaufventil aus Fig. 1 im geschlossenen Zustand in einer geschnittenen Ansicht.

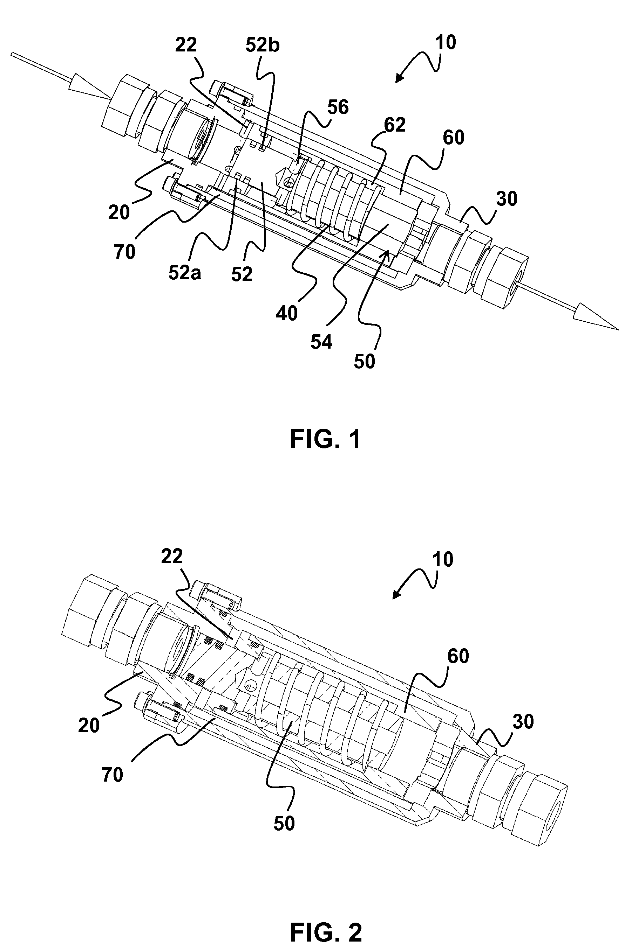

Fig. 1 zeigt eine geschnittene Ansicht eines besonders bevorzugt ausgestalteten Ausführungsbeispiels nach der Erfindung im offenen Zustand in einer geschnittenen Ansicht. Das Rückschlagventil 10 weist eine Zulauf 20 und einen Ablauf 30 auf, die im Gehäuse des Rückschlagventils 10 gegenüberliegend und zueinander konzentrisch angeordnet sind. Das Fluid, beispielsweise Wasser, wird im offenen Zustand des Rückschlagventils 10 in Pfeilrichtung geführt.

Im Rückschlagventil 10 ist ein verschieblich gelagerter Rückschlagkörper 50 vorgesehen, der gegen die in Richtung des Zulaufs wirkende Kraft einer Feder 40 gelagert ist. Im entspannten Zustand der Feder 40 wird der Rückschlagkörper 50 also in den Zulauf 20 gedrückt und das Rückstellventil 10 verschlossen - dieser Zustand ist in Fig. 2 dargestellt.

In seinem dem Zulauf 20 zugewandten Abschnitt 52 weist der Rückschlagkörper 50 bevorzugt zwei an seinem Umfang umlaufend angeordnete Dichtungen 52a, 52b auf. Diese Dichtungen 52a, 52b dichten den aus Fig. 2 ersichtlichen Raum zwischen Zulauf 20 und Rückschlagkörper 50 derart, dass das Fluid nicht von stromaufwärts nach stromabwärts des Rückschlagventils 10 geführt werden kann. Andererseits wird verhindert, dass Fluid entgegen dieser Fluidrichtung nach stromaufwärts über das Rückschlagventil 10 hinaus geführt werden kann.

Die Verschieblichkeit des Rückschlagkörpers 50 ist durch einen Anschlag begrenzt, der im verschlossenen Zustand des Rückschlagventils 10 auch die Kräfte einer stromaufwärts gerichteten Druckwelle in das Gehäuse des Rückschlagventils 10 ableitet, ohne dass die Dichtungen 52a, 52b unmittelbar belastet werden.

Darüber hinaus ist vorgesehen, dass der Zulauf 20 einen radial verlaufenden Kanal 22 aufweist, der im offenen Zustand das Fluid vom Zulauf 20 in Richtung des Ablaufs 30 führt. Im offenen Zustand ist der radial verlaufende Kanal 22 vom Rückschlagkörper 50 freibleibend, wobei der Rückschlagkörper 50 den Zulauf 20 begrenzt, sodass das dem Zulauf 20 zugeführte Fluid zwangsweise den radial verlaufenden Kanal 22 zwangsweise passieren muss.

Im geschlossenen Zustand des Rückschlagventils 10 hingegen, wenn der Abschnitt 52 des Rückschlagkörpers 50 in den Zulauf 20 vollständig eingeführt ist, kommen die Dichtungen 52a, 52b stromaufwärts des radial verlaufenden Kanals 22 zu liegen, sodass das dem Zulauf 20 zugeführte Fluid nicht zum radial verlaufenden Kanal 22 gelangen kann. Gleichzeitig drückt das stromaufwärts rückfließende nicht gegen die Dichtungen 52a, 52b, sondern gegen die seitliche Wandung des Rückstellkörpers 50, die den radial verlaufenden Kanal 22 im Innern des Zulaufs 20 verschließt.

Das Rückschlagventil 10 weist darüber hinaus eine Hülse 60, in der der Rückstellkörper 50 verschieblich gelagert ist. Die Feder 40 stützt sich bevorzugt an dieser Hülse 50 ab und ist besonders bevorzugt in einem zwischen Rückschlagkörper 50 und Innenwandung der Hülse 60 gebildeten Zwischenraum 62 angeordnet. Die Hülse 60 ist in Richtung des Ablaufs 30 offen ausgebildet und wird in Richtung des Zulaufs 20 vom Rückschlagkörper 50 verschlossen. Vorteil dieser Ausgestaltung ist, dass stromaufwärts in das Rückschlagventil 10 vordringendes Fluid nicht axial zum Zulauf 20 gelangen kann, sondern eine Zwangsführung in dem zwischen Außenwandung der Hülse 60 und Innenwandung des Gehäuses des Rückstellventils 10 gebildeten Zwischenraums 70 erfährt. Auch durch diese Maßnahme werden die Dichtungen 52a, 52b entlastet.

Schließlich ist in diesem bevorzugten Beispiel auch vorgesehen, dass der Rückschlagkörper 50 einen zum Ablauf 30 geöffneten axialen Kanal 54 und eine den axialen Kanal 54 mit dem Zwischenraum 62 verbindenden Radialkanal 58 aufweist. Ein am Ablauf 30 anliegender hydraulischer Überdruck wirkt über die im Rückschlagkörper 50 vorgesehenen Kanäle 54, 56 auf den Zwischenraum 62 und wird in das Gehäuse des Rückschlagventils 10 abgeleitet, wiederum ohne dass die Ventildichtungen 52a, 52b belastet werden.

Vorteile der Erfindung sind, dass die von der stromabwärts gelegenen Leitung kommende Druckwelle, beispielsweise die vom Kraftstoff-Zirkulationskreis kommende Druckwelle, umgelenkt wird und seitlich auf den Rückschlagkörper trifft, sodass eine direkte Beaufschlagung der Ventildichtung vermieden wird. Dabei wird der Druckstoß von dem mechanischen Anschlag des Rückschlagkörpers aufgenommen ohne direkt auf die Ventildichtung zu wirken. Dabei wird auch ein seitliches Unterwandern von Flachdichtungen, wie z.B. bei herkömmlichen Rückschlagventilen, wirkungsvoll verhindert.

Weiterhin ist es bei der erfindungsgemäßen Ausgestaltung des Rückschlagventils vorteilhaft, dass aufgrund des durch die Feder vorgespannten Rückschlagkörpers eine Druckdifferenz zu überwinden ist, sodass das Rückschlagventil nur dann geöffnet ist, wenn der am Zufluss anliegende (Wasser-) Druck deutlich höher ist als der am Abfluss anliegende (Kraftstoff-) Druck.

Bei geöffnetem Rückschlagventil wird der auch Wasserstrom umgelenkt und der bewegliche Ventilkolben wird zentral der ankommenden Druckwelle gegenübergestellt, sodass eine stromaufwärts wirkende Druckwelle zunächst auf den beweglichen Ventilkolben trifft, der nun eine Dämpfungsfunktion ausübt, da der Kolben beim Zurückfedern elastisch die ankommende Druckwelle aufnehmen kann ohne sie weiterzuleiten.

Hält die Druckwelle länger an und wird eine systemimmanent vorgegebene Druckdifferenz zwischen Einlass und Auslass überschritten, verschließt der Rückschlagkörper das Rückschlagventil.

Bei Verwendung in Kraftstoffanlagen zur Herstellung von Kraftstoff Wasser-Gemischen erfolgt bei Ausfall der Wasserpumpe also automatisch eine Trennung des Wasser-Systems vom Kraftstoffsystem.

## Patentansprüche

1. Rückschlagventil (10) mit
- einem Zulauf (20),
- einem Ablauf (30) und
- einem gegen die in Richtung des Zulaufs (20) gerichtete Kraft einer Feder (40) verschieblich gelagerten Rückschlagkörper (50),
wobei der Rückschlagkörper (50) einen in den Zulauf (20) einführbaren Abschnitt (52) aufweist, an dessen Umfang eine den Zulauf (20) verschließende Dichtung (52a) angeordnet ist,
**dadurch gekennzeichnet, dass**
der Rückschlagkörper (50) in einer in Richtung des Ablaufs (30) offenen und in Richtung des Zulaufs (20) durch den Rückschlagkörper (50) abdichtend verschlossenen Hülse (60) geführt ist und
zwischen dem Rückschlagkörper (50) und der Innenwandung der Hülse (60) ein Zwischenraum (62) gebildet ist, der zur Ableitung eines am Ablauf (30) auftretenden Überdrucks mit dem Ablauf (30) kommunizierend verbunden ist.

2. Rückschlagventil (10) nach Anspruch 1, **dadurch gekennzeichnet, dass** der Rückschlagkörper (50) einen zum Ablauf (30) geöffneten axialen Kanal (54) und einen den axialen Kanal (54) mit dem Zwischenraum (62) verbindenden Radialkanal (56) aufweist.

3. Rückschlagventil (10) nach einem der vorhergehenden Ansprüche, **dadurch gekennzeichnet, dass** die Feder (40) in der Hülse (60) gelagert ist.

4. Rückschlagventil (10) nach einem der vorhergehenden Ansprüche, **dadurch gekennzeichnet, dass** der Zulauf (20) einen in seinem vom Rückschlagkörper (50) überstrichenen Bereich angeordneten radialen Kanal (22) aufweist, der mit einem den Zulauf (20) mit dem Ablauf (30) verbindenden Fluidkanal (70) kommunizierend verbunden ist.

5. Rückschlagventil (10) nach einem der vorhergehenden Ansprüche, **dadurch gekennzeichnet, dass** der Zulauf (20) und der in den Zulauf (20) einführbare Abschnitt (52) des Rückschlagkörpers (50) zylindrisch ausgebildet sind.

6. Rückschlagventil (10) nach einem der vorhergehenden Ansprüche, **gekennzeichnet durch** zwei am Umfang des in den Zulauf (20) einführbaren Abschnitts (52) des Rückschlagkörpers (50), den Zulauf (20) verschließende Dichtungen (52a, 52b).
